# EUROPEAN PATENT APPLICATION

(11) **EP 4 491 260 A1**
(43) Date of publication of application: **15.01.2025**
(21) Application number: 23857208.5
(22) Date of filing: 09.08.2023
(51) Int. Cl.: B01D 63/02, B01D 69/00, B01D 69/08, B01D 71/44, B01D 71/68, H01M 8/00, H01M 8/04, F24F 6/00

(54) **HOLLOW FIBER MEMBRANE, HOLLOW FIBER MEMBRANE UNIT, HOLLOW FIBER MEMBRANE MODULE, AND DEHUMIDIFIER**

(30) Priority: 24.08.2022 JP 2022133043
(71) Applicant: Toray Industries, Inc., Tokyo 103-8666 (JP)
(72) Inventor: TAMIYA, Ryuta, Otsu-shi, Shiga 520-8558 (JP)
(74) Representative: Prüfer & Partner mbB Patentanwälte · Rechtsanwälte
(86) International application number: PCT/JP2023/029075
(87) International publication number: WO 2024/043095

(57) **Abstract**

The present invention relates to a hollow fiber membrane including a fine pores layer, a coarse pores layer, and a strength retention layer, in which, in a cross section perpendicular to a longitudinal direction of the membrane, the fine pores layer, the coarse pores layer, and the strength retention layer are disposed in this order from an inside of the hollow fiber membrane, and the entire hollow fiber membrane has a porosity of 60% or more and 75% or less.

## Description

### TECHNICAL FIELD

The present invention relates to a hollow fiber membrane, a hollow fiber membrane unit, a hollow fiber membrane module, and a humidity control machine. More specifically, the present invention relates to a hollow fiber membrane, a hollow fiber membrane unit, a hollow fiber membrane module, and a humidity control machine suitably used for a humidity control unit used in a fuel cell system or an air conditioning system.

### BACKGROUND ART

Hollow fiber membranes are widely used in medical applications such as blood purifiers for patients with renal failure and water treatment applications such as water purifiers. In addition, a hollow fiber membrane having pores of a size capable of gas separation exhibits excellent gas separability among various inorganic membranes, and can be used even in an environment where chemical resistance and heat resistance are required. For this reason, in recent years, the use of hollow fiber membranes has been spreading in a method for humidifying fuel gas to moisturize an electrolyte membrane incorporated in a fuel cell system and a method for dehumidifying moisture in factory compressed air.

Several types of hollow fiber membranes that allow water vapor to selectively permeate as described above are currently commercially available, but the materials and the permeation principle are different from each other. A membrane that uses a polyimide resin as a material and performs this operation using a dissolution diffusion method has a disadvantage that the water vapor permeation coefficient is low although the membrane is excellent in heat resistance and strength. In addition, a membrane that uses a fluorine-based ion exchange membrane as a material and operates on the principle of the ion hydration method has a disadvantage that the water vapor permeation coefficient is high but the heat resistance is poor, and the membrane itself is very expensive.

On the other hand, a membrane that uses a polyetherimide resin as a material and performs humidification and dehumidification using a capillary condensation method achieves both water vapor permeability and heat resistance, and is adopted in many industrial fields. However, since the absolute strength of the membrane is weak and the flexibility is particularly poor, there is a problem that the hollow fiber membrane is cut when humidifying or dehumidifying a large amount of gas.

When a hollow fiber membrane is used for humidification applications of a solid polymer electrolyte fuel cell, for in-vehicle use, a large volume of air humidification, approximately 3,000 to 7,000 NL/min is required, and warm water is often used as a humidifying drive source for stationary use. In any case, it is particularly required to impart durability and heat resistance to the hollow fiber membrane.

As humidification applications of fuel cells, polysulfone-based resins which are generally widely used as ultrafiltration membranes, microfiltration membranes, and the like and which are excellent in strength stability under wet humidification conditions are also used. A water vapor permeable membrane obtained by dry-wet spinning of a spinning solution composed of a water-soluble organic solvent solution of a polysulfone-based resin and hydrophilic polyvinylpyrrolidone has been proposed (Patent Documents 1 and 2). In addition, a method for enhancing water vapor permeability by providing a finger void structure in a membrane cross section by controlling a phase separation speed during membrane formation is described (Patent Document 3). However, in the above-described conventional technique, there is a possibility that gas leakage and durability cannot be achieved at the same time although water vapor permeability can be enhanced.

### PRIOR ART DOCUMENT

### PATENT DOCUMENTS

Patent Document 1: Japanese Patent No. 4100215
Patent Document 2: Japanese Patent Laid-open Publication No. 2011-67812
Patent Document 3: WO 2011/021300

### SUMMARY OF THE INVENTION

### PROBLEMS TO BE SOLVED BY THE INVENTION

An object of the present invention is to provide a hollow fiber membrane having not only excellent water vapor permeability but also excellent durability, and is effectively used as a humidity control machine and the like, and a membrane module thereof.

### SOLUTIONS TO THE PROBLEMS

In order to achieve the above object, the present invention has the following configurations.

There is provided a hollow fiber membrane including a fine pores layer, a coarse pores layer, and a strength retention layer, in which, in a cross section perpendicular to a longitudinal direction of the membrane (hereinafter referred to as a "vertical cross section"), the fine pores layer, the coarse pores layer, and the strength retention layer are disposed in this order from an inside of the hollow fiber membrane, and the entire hollow fiber membrane has a porosity of 60% or more and 75% or less.

### EFFECTS OF THE INVENTION

The hollow fiber membrane obtained by the present invention can be effectively used as a hollow fiber membrane having excellent water vapor permeability and durability, and can provide excellent water vapor permeability and durability even as a membrane module using the hollow fiber membrane.

### BRIEF DESCRIPTION OF THE DRAWINGS

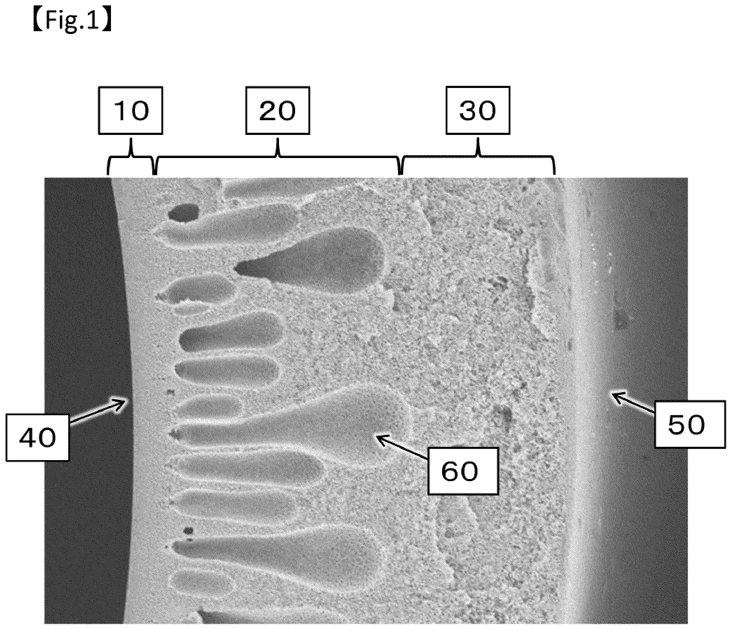

Fig. 1 is a cross sectional view of a hollow fiber membrane in which a fine pores layer, a coarse pores layer, and a strength retention layer are disposed in this order in a vertical cross section.

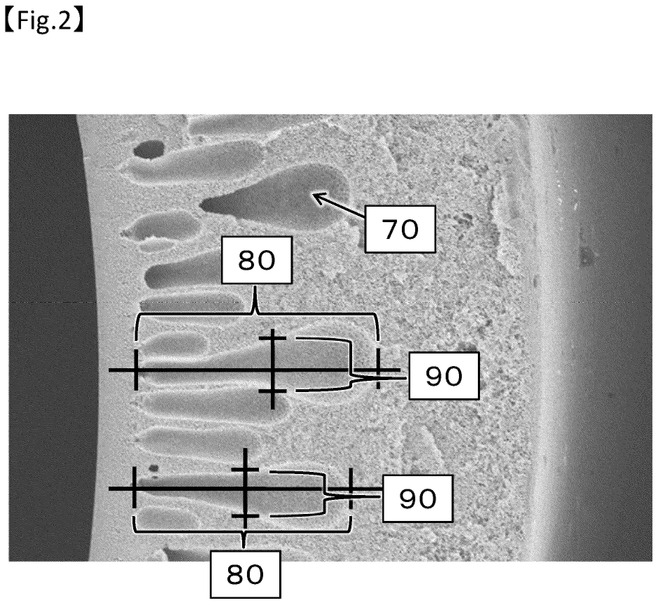

Fig. 2 is a view showing an example of a method for measuring a major axis and a minor axis of a void (b).
Fig. 3 is a view showing a method for measuring water vapor permeability performance.
Fig. 4 is a view showing a method for evaluating durability by a pressure impulse test.

### EMBODIMENTS OF THE INVENTION

A hollow fiber membrane of the present invention is a hollow fiber membrane including a fine pores layer, a coarse pores layer, and a strength retention layer, in which, in a cross section perpendicular to a longitudinal direction of the membrane, the fine pores layer, the coarse pores layer, and the strength retention layer are disposed in this order from an inside of the hollow fiber membrane, and the entire hollow fiber membrane has a porosity of 60% or more and 75% or less. Hereinafter, the present invention will be described.

The hollow fiber membrane of the present invention is a hollow fiber membrane including a fine pores layer, a coarse pores layer, and a strength retention layer, in which in a vertical cross section, the fine pores layer, the coarse pores layer, and the strength retention layer are disposed in this order from an inside of the hollow fiber membrane, and accordingly, the durability of the hollow fiber membrane can be enhanced while the water vapor permeability of the hollow fiber membrane is maintained.

Here, as will be described later, preferably, the fine pores layer has a void (a) having an average pore size of 0.05 um or more and 0.3 um or less. In addition, as will be described later, preferably, the coarse pores layer has a void (b) in which the length of the long side is 28% or more and 68% or less of the thickness of the porous membrane hollow fiber membrane.

In the hollow fiber membrane of the present invention, in a vertical cross section, the porosity of the entire hollow fiber membrane is 60% or more and 75% or less, and more preferably 63% or more and 72% or less. When the porosity of the entire hollow fiber membrane is 60% or more and 75% or less, the polymer skeleton density of the main component of the hollow fiber membrane is increased, and durability can be improved. When the porosity of the entire hollow fiber membrane is less than 60%, a structural part in which the main component of the hollow fiber membrane is aggregated increases, and the water vapor permeability decreases. On the other hand, when the porosity exceeds 75%, polymer aggregation of the main component of the hollow fiber membrane is weakened, coarse pores are likely to be formed throughout the entire membrane thickness of the hollow fiber membrane, and durability may deteriorate. The porosity can be determined by the following method. First, a hollow fiber membrane having a certain length is dried in a dryer set at 50°C for 24 hours. Next, the number of the hollow fiber membranes is adjusted such that the weight after drying treatment is in the range of 1 g or more and 5 g or less. The volume of the hollow fiber membrane is calculated from the number and length of the used hollow fiber membranes, the outer diameter and inner diameter of the membranes, and the porosity is calculated using the dry weight and the polymer density as a main component of the hollow fiber membrane.

In the hollow fiber membrane of the present invention, preferably, in the vertical cross section, a ratio of an average pore size of the strength retention layer to an average pore size of the coarse pores layer is 0.005 or more and 0.05 or less. When the ratio of the average pore size of the strength retention layer to the average pore size of the coarse pores layer is 0.005 or more and 0.05 or less, it is possible to improve durability while enhancing water vapor permeability of the hollow fiber membrane. Therefore, the ratio is more preferably 0.005 or more and 0.04 or less, and still more preferably 0.005 or more and 0.03 or less.

In the hollow fiber membrane of the present invention, preferably, in a vertical cross section, the strength retention layer has a void (c) having an average pore size of 0.10 um or more and 1.0 um or less. When the strength retention layer has a void (c) having an average pore size of 0.10 um or more, the water vapor permeation resistance can be reduced. In addition, when the strength retention layer has a void (c) having an average pore size of 1.0 µm or less, high durability can be imparted to the hollow fiber membrane. Therefore, the average pore size of the void (c) in the strength retention layer is more preferably 0.15 um or more and 0.7 um or less, and still more preferably 0.2 um or more and 0.4 um or less. Here, as will be described later, preferably, the strength retention layer is a region where there is no void (b) in which the length of the major axis is 28% or more and 68% or less of the thickness of the porous membrane hollow fiber membrane.

In the hollow fiber membrane of the present invention, preferably, in the vertical cross section, the fine pores layer has a void (a), and the average pore size thereof is 0.05 um or more and 0.3 µm or less. When the average pore size of the fine pores layer is 0.3 um or less, air blocking properties can be imparted to the hollow fiber membrane. The average pore size of the void (a) is more preferably 0.07 um or more and 0.25 um or less, and still more preferably 0.10 um or more and 0.20 um or less from the viewpoint of easily achieving both water vapor permeability and air blocking properties of the hollow fiber membrane. The hollow fiber membrane of the present invention can form voids by bringing an injection liquid into contact with a spinning dope solution and diffusing the injection liquid to induce phase separation as will be described later. Therefore, the average pore size of the void (a) can be controlled to 0.05 um or more by designing the spinning dope solution for controlling the phase separation speed and designing and controlling the injection liquid.

The pore size (average pore size) in the hollow fiber membrane of the present invention is determined by taking an electron micrograph of the hollow fiber membrane into a computer, analyzing the electron micrograph with image analysis software, and quantifying the result. Specifically, from the sum of the areas of the pore parts and the number of pore parts in the image read into the image analysis software, the pore size (average pore size) is obtained by the following Formulas [1] and [2]. Pore area (average pore area) [µm2] = sum of areas of pore parts/number of pore parts Pore size (average pore size) [um] = (average pore area/n)1/2

In the hollow fiber membrane of the present invention, the shape of the pore is not particularly limited, but as can be seen from the above Formula [2], the pore is approximated to a circular shape, and the pore size is calculated from the area of the circular shape. Therefore, when the shape is significantly different from the circular shape in shapes such as a slit shape, a spindle shape, and an irregular shape, the deviation between the calculated value and the actual state becomes large, and thus the shape of the pore is more preferably elliptical or circular.

In the hollow fiber membrane of the present invention, preferably, in a vertical cross section, the thickness of the strength retention layer is 28% or more and 78% or less of the thickness of the hollow fiber membrane. When the thickness of the strength retention layer is 28% or more and 78% or less of the thickness of the hollow fiber membrane, it is possible to impart high durability to the hollow fiber membrane while suppressing an increase in water vapor permeation resistance in the strength retention layer as small as possible. The thickness of the strength retention layer is preferably 28% or more and 78% or less of the thickness of the hollow fiber membrane, more preferably 28% or more and 70% or less, and still more preferably 30% or more and 60% or less. In the hollow fiber membrane of the present invention, in a vertical cross section, the coarse pores layer has a void (b) having a length of the major axis is 28% or more and 68% or less of the thickness of the hollow fiber membrane. When the coarse pores layer has a void (b) having a length of the major axis of 28% or more and 68% or less of the thickness of the hollow fiber membrane, the permeation (diffusion) resistance of the void part in the hollow fiber membrane decreases, and the water vapor permeability increases. The length of the major axis in the coarse pores layer is more preferably 33% or more and 60% or less of the thickness of the hollow fiber membrane, and more preferably 33% or more and 55% or less of the thickness of the hollow fiber membrane, from the viewpoint of maintaining the durability of the hollow fiber membrane.

In addition, preferably, in the hollow fiber membrane of the present invention, in the vertical cross section, the ratio of the major axis to the minor axis (major axis/minor axis) of the void (b) is 2.0 or more and 6.0 or less. By setting the ratio of the major axis to the minor axis (major axis/minor axis) of the void (b) to 2.0 or more, the permeation resistance in the membrane thickness direction of the hollow fiber membrane can be reduced, and the water vapor permeability can be enhanced. The ratio of the major axis to the minor axis (major axis/minor axis) of the void (b) is more preferably 3.0 or more and 6.0 or less. The thickness of the hollow fiber membrane and the major axis and minor axis of the void (b) can be measured by the following method. First, the thickness of the hollow fiber membrane is determined by cutting the hollow fiber membrane with a single blade in the membrane thickness direction,and setting the hollow fiber membrane in a microwatcher (VH-Z100 manufactured by KEYENCE CORPORATION). When the cross section of the hollow fiber membrane is crushed by cutting, the cutting is performed again until the cross section becomes a substantially perfect circle. The cross section of the hollow fiber membrane was observed at an easily measurable magnification (for example, the magnification may be 1,000 times, but the magnification may be 100 times or 10 times depending on the size of the hollow fiber membrane), the range of the membrane thickness width of the hollow fiber membrane was designated on the monitor screen on which the cross section was projected, and the numerical value displayed on the monitor screen was read. The membrane thickness width is measured at five points for one hollow fiber membrane. The above series of measurements was performed with respect to any five hollow fiber membranes, and the average value of 25 pieces of measurement data in total was calculated and defined as the thickness (membrane thickness) of the hollow fiber membrane. Next, with respect to the major axis/minor axis of the void (b), five points are cut out for each of the five hollow fiber membranes to obtain a cross section. When extracting the hollow fiber membrane from the hollow fiber membrane module, any five hollow fiber membranes are randomly selected. For the obtained membrane cross section, an image photographed using SEM at an easily measurable magnification is observed, the major axis and minor axis at three points are measured for macro-sized coarse pores that are clearly observed to be large, and the major axis/minor axis of each of the coarse pores is calculated. Similarly, the major axis/minor axis of each of the coarse pores is calculated for each of the five images photographed for each of the cut five cross sections, and the same measurement is performed for five hollow fiber membranes. The average value of all the values of major axis/minor axis obtained in the hollow fiber membrane is taken as the average value of major axis/minor axis of the void (b). In addition, the ratio of the major axis to the thickness of the hollow fiber membrane was determined based on the average value of the total measured major axis (three points × five cross sections × five in one cross section of one hollow fiber membrane) and the membrane thickness obtained above. In addition, preferably, the void (b) has a finger void structure. Here, the finger void structure is a void such as a mark of a person pressing the thumb, and the longest inner diameter (that is, the major axis) is oriented in the membrane thickness direction of the hollow fiber membrane.

In the hollow fiber membrane of the present invention, preferably, in the vertical cross section, the thickness of the fine pores layer is 2.0 um or more and 12.0 um or less. When the thickness of the fine pores layer is 2.0 um or more and 12.0 um or less, it is possible to make it difficult to form defects such as pinholes on the surface of the hollow fiber membrane while imparting high water vapor permeability to the hollow fiber membrane. The thickness of the fine pores layer is preferably 5.0 um or more and 10.0 um or less, and more preferably 6.0 um or more and 9.0 um or less.

The hollow fiber membrane of the present invention further includes a strength retention layer in a vertical cross section. By providing the strength retention layer, it is easy to have both water vapor permeability and durability of the hollow fiber membrane. Here, the strength retention layer is a region where the void (b) in which the length of the long side is 28% or more and 68% or less of the thickness of the hollow fiber membrane does not exist.

In addition, preferably, in the vertical cross section, the fine pores layer has a dense layer inside thereof, and the thickness of the dense layer in the vertical cross section is 0.1 um or more and 0.5 um or less. Here, the dense layer refers to a layer having no pores with a pore area exceeding 1,260 nm², that is, only pores with a pore area of 1,260 nm² or less when a vertical cross section is observed with a scanning electron microscope (SEM).

The material constituting the hollow fiber membrane of the present invention is not particularly limited, and examples thereof include a polysulfone-based polymer, polystyrene, polyurethane, polyethylene, polypropylene, polycarbonate, polyvinylidene fluoride, polyacrylonitrile, polymethyl methacrylate, polyvinyl chloride, and polyester. Among these, the hollow fiber membrane preferably contains a polysulfone-based polymer from the viewpoint of excellent heat resistance and easy formation of the hollow fiber membrane. Furthermore, the content of the polysulfone-based polymer is not particularly limited, but the polysulfone-based polymer is preferably a main component of the hollow fiber membrane.

Herein, the polysulfone-based polymer is a polymer having an aromatic ring, a sulfonyl group, and an ether group in the main chain, and examples thereof include polysulfone, polyphenylsulfone, polyethersulfone, and poly aryl ether sulfone. In addition, the main component refers to a raw material contained in an amount of 90% by mass or more and 100% by mass or less with respect to 100% by mass of the entire hollow fiber membrane.

As the main component of the hollow fiber membrane in the present invention, for example, a polysulfone-based polymer represented by the following chemical Formulae (1) and/or (2) is suitably used, but the main component is not limited thereto. In the formulae, n is an integer of 1 or more, preferably 50 to 80. In addition, when n has a distribution, the average value thereof is set as n.

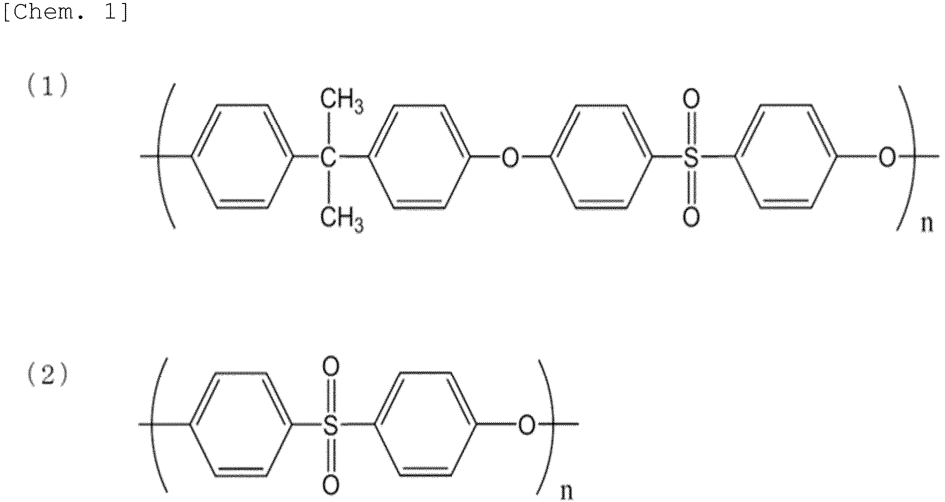

The polysulfone-based polymer that can be used in the hollow fiber membrane of the present invention is suitably a polymer composed only of the repeating units represented by the Formulae (1) and/or (2), but the polysulfone-based polymer may be copolymerized with other monomers or may be a modified product as long as the effect of the present invention is not hindered. When the polysulfone-based polymer is copolymerized with other monomers, the copolymerization ratio of the other monomers is preferably 10% by mass or less with respect to the entire polysulfone-based polymer.

Specific examples of the polysulfone-based polymer that can be used for the hollow fiber membrane of the present invention include polysulfone-based polymers such as Udel^{®} Polysulfone P-1700 and P-3500 (manufactured by Solvay Corp), Ultrason^{®} S3010, P3010, and S6010 (manufactured by BASF Corp), VICTREX^{®} (manufactured by Sumitomo Chemical Co., Ltd.), RADEL^{®} Polyphenylsulfone R-5000NT (manufactured by Solvay Corp), Veradel Polyethersulfone 3000MP (manufactured by Solvay Corp), and Ultrason^{®} E (manufactured by BASF Corp).

As a method for producing the hollow fiber membrane module of the present invention, there are various methods according to the applications thereof. The overall process can be broadly divided into a process of producing a hollow fiber membrane and a process of incorporating the hollow fiber membrane into a module.

When a polysulfone-based polymer is contained as a main component as a material constituting the hollow fiber membrane of the present invention, a hydrophilic polymer is preferably contained. Examples of the hydrophilic polymer include polyalkylene oxide, polyvinyl alcohol, polyethylene glycol, polyvinylpyrrolidone, and the like, and among these, a hydrophilic polymer having a glass transition temperature higher than 150°C is preferably used because it is possible to provide a hollow fiber membrane having excellent heat resistance. The polyvinylpyrrolidone mentioned as an example is excellent in compatibility with a polysulfone-based polymer and has a high glass transition temperature of 180°C, and thus is preferable for humidification of a fuel cell system. That is, the hollow fiber membrane of the present invention particularly preferably contains a polysulfone-based polymer and polyvinylpyrrolidone.

Examples of the method for setting the thickness of the fine pores layer in the hollow fiber membrane to 2.0 um or more and 12.0 um or less and the thickness of the dense layer to 0.1 um or more and 0.5 um or less include a method for using a solution having an effect of aggregating and coagulating the spinning dope solution as a poor solvent, and a method for controlling the viscosity and cohesiveness at the time of phase separation by adjusting the polysulfone-based polymer concentration of the spinning dope solution and the blending ratio of the polysulfone-based polymer and polyvinylpyrrolidone. The poor solvent is a solution insoluble in the spinning dope solution. A dense layer and a fine pores layer can be formed by bringing a poor solvent into contact with a spinning dope solution immediately after the spinning dope solution is discharged from a spinneret during membrane formation. However, since it is conceivable that aggregation of the polymer is too fast and membrane formation becomes difficult only with the poor solvent, it is preferable to use a solution obtained by mixing the poor solvent and a solvent (good solvent) that dissolves the polymer.

Examples of the method for setting the porosity in the entire hollow fiber membrane to 60% or more and 75% or less include a method for adjusting the skeleton density of a polymer as a main component of the hollow fiber membrane. That is, in this method, it is important to control the polysulfone-based polymer concentration in the spinning dope solution.

The polysulfone-based polymer concentration of the spinning dope solution is preferably 20% by mass or more and 35% by mass or less with respect to the entire spinning dope solution. The polysulfone-based polymer concentration is more preferably 25% by mass or more and 30% by mass or less. When the polysulfone-based polymer concentration of the spinning dope solution is less than 20% by mass, the porosity of the hollow fiber membrane is increased, and the durability tends to be lowered.

The viscosity of the spinning dope solution is preferably 30 poise or more and 100 poise or less, and more preferably 40 poise or more and 80 poise or less. When the viscosity of the spinning dope solution is higher than 100 poise, the dense layer and the fine pores layer are thick, and the water vapor permeability tends to be low. When the viscosity is lower than 30 poise, the dense layer tends to be thin, and thus the strength of the hollow fiber membrane is low and the membrane tends to be weak.

As a method for forming a hollow fiber membrane in which a fine pores layer and a coarse pores layer are disposed from the inside of the hollow fiber membrane in the vertical cross section, for example, a solution having high diffusibility with respect to a spinning dope solution is preferably used as the injection liquid. When a solution having low diffusibility is used as the injection liquid, it is difficult to precisely control voids, and a membrane may not be formed. Furthermore, in this method, it is also important to control the viscosity of the spinning dope solution, the condensability of the spinning dope solution and the injection liquid, and the like.

As an example, when the viscosity of the spinning dope solution is high, the diffusion speed of the injection liquid with respect to the spinning dope solution becomes slow, and in the void formation process of the hollow fiber membrane, the growth of voids becomes slow and the length of voids becomes short. When the injection liquid has viscosity, the same growth of voids is expected.

Furthermore, when a highly cohesive injection liquid such as water is used, only the surface which is in contact with the injection liquid is aggregated, and a large void may be formed near the surface of the membrane which is not in contact with the injection liquid.

That is, in order to control the size of voids in the fine pores layer, the coarse pores layer, and the strength retention layer, it is important to design a spinning dope solution for controlling the phase separation speed, design an injection liquid, and the like.

In order to form a coarse pores layer having a void (b), it is important to control the growth speed of voids by controlling the phase separation speed similarly by designing a spinning dope solution or designing an injection liquid.

Specifically, the viscosity of the spinning dope solution during membrane formation is preferably 30 poise or more and 100 poise or less, and more preferably 40 poise or more and 80 poise or less. When the viscosity of the spinning dope solution is higher than 100 poise, sometimes the void (b) or the finger void structure cannot be obtained. When the spinning dope solution is less than 30 poise, voids in the vicinity of the membrane surface become large, and eventually, the voids reach the membrane surface to form a weak membrane in which membrane surface pores are likely to be formed. In addition, even when the same polymer is used, the viscosity of the spinning dope solution increases when a polymer having a large molecular weight of the polymer is used, and the viscosity decreases when a polymer having a small molecular weight is used. Furthermore, the viscosity also varies depending on the addition amount. It is preferable to select the type of the polymer, the molecular weight of the polymer, and the addition amount of the polymer such that the viscosity of the spinning dope solution is in the range of 30 poise or more and 100 poise or less.

With respect to the ratio of the solvent of the injection liquid, when the ratio of the organic solvent (good solvent: aprotic polar solvents such as dimethylformamide, N,N-dimethylacetamide, and N-methyl-2-pyrrolidone) that dissolves the polymer of the spinning dope solution is increased, aggregation that occurs during membrane formation of the polymer is delayed, and the void (b) or the finger void structure is less likely to be formed. When the ratio of the solvent (poor solvent) insoluble in the polymer of the spinning dope solution is high, rapid aggregation occurs due to the injection liquid and the spinning dope solution, and the void (b) or the finger void structure is easily formed. That is, the formation of the void (b) or the finger void structure can also be controlled by adjusting the type and ratio of the solvent of the injection liquid. The concentration of the good solvent in the injection liquid is preferably 10% by mass or more and 60% by mass or less, and more preferably 20% by mass or more and 50% by mass or less.

In addition, the size of voids can also be controlled by combining water, a low-viscosity solvent, or a solution of water/low-viscosity solvent as a low-viscosity injection liquid, or a solvent in which a polymer such as glycerin or PVP is dissolved as a high-viscosity injection liquid, with a spinning dope solution.

As the polyvinylpyrrolidone added to the spinning dope solution as the hydrophilic polymer, polyvinylpyrrolidone having an average molecular weight of about 1,000 (corresponding to K-15) to 1,200,000 (corresponding to K-90), preferably a molecular weight of about 40,000 (K-30) to 1,200,000 (corresponding to K-90) exists, and is preferably used at a ratio of 5 to 50% by mass, and more preferably 8 to 30% by mass, based on 100% by mass of the polysulfone-based polymer. When the content is less than 5% by mass with respect to the polysulfone-based polymer, hydrophilicity cannot be imparted to the surface of the hollow fiber membrane, and there is a concern that the affinity with water vapor may be lowered. When the content exceeds 50% by mass, the strength of the hollow fiber membrane is low, and membrane formation may be difficult.

In the hollow fiber membrane of the present invention, the content of polyvinylpyrrolidone in 100% by mass of the hollow fiber membrane is preferably 5% by mass or less, and more preferably 4% by mass or less. When the content of polyvinylpyrrolidone in the hollow fiber membrane is 5% by mass or more, hydrophilicity or swellability of polyvinylpyrrolidone is reduced as the use environment of the fuel cell is in a high temperature or/and low humidity region, and thus it may be difficult to maintain water vapor permeability performance. The polyvinylpyrrolidone content in the hollow fiber membrane is measured as described in (3) of Examples which will be described later. In addition, the content of polyvinylpyrrolidone in 100% by mass of the hollow fiber membrane is preferably 1% by mass or more, and more preferably 2% by mass or more. When the content of polyvinylpyrrolidone in the hollow fiber membrane is less than 1% by mass, the hydrophilicity of the hollow fiber membrane is reduced, and accordingly, the membrane may become less likely to absorb water vapor when the hollow fiber membrane is in contact with the water vapor.

In the hollow fiber membrane of the present invention, the inner diameter of the hollow fiber membrane is preferably 500 um or more and 1,000 um or less. When the inner diameter is less than 500 um, when the high flow rate air flows into the hollow portion of the hollow fiber membrane, the pressure from the inlet to the outlet of the hollow portion increases, and in the worst case, fiber breakage of the hollow fiber membrane may occur. On the other hand, when the thickness exceeds 1,000 um, in a module equipped with a hollow fiber membrane, the air flow outside the hollow fiber membrane is biased, and the hollow fiber membrane may not be effectively utilized. In addition, when the hollow fiber membrane is too thick, the size of the module tends to be large, which is not suitable for space saving. Therefore, the inner diameter is preferably 500 um or more and 1,000 um or less.

In addition, the membrane thickness of the hollow fiber membrane is preferably 60 um or more and 200 um or less. When the membrane thickness is less than 60 µm, the breaking strength of the hollow fiber membrane decreases, and when a high flow rate air is applied, fiber breakage of the hollow fiber membrane may occur. In addition, when the membrane thickness exceeds 200 µm, the structure control stability during membrane formation of the hollow fiber membrane is insufficient, and the membrane formation reproducibility of void parts of the hollow fiber membrane may be poor.

In addition, in order to enhance the water vapor permeability of the hollow fiber membrane of the present invention, the water permeability is preferably in a small range to a certain extent rather than completely absent.

The hollow fiber membrane unit of the present invention is formed by bundling a plurality of the hollow fiber membranes of the present invention. In addition, as a method for bundling a plurality of hollow fiber membranes, the hollow fiber membranes may be covered with a covering yarn. Here, covering means that one or more rod-like or thread-like members are arranged side by side, and the covering member is entirely wound with the thread-like or belt-like member to maintain the state. The winding method may be winding with a plurality of yarns or bands, or may be spirally winding with one yarn or band. In short, it is sufficient that a state where rod-like or thread-like objects are arranged can be maintained. Here, the covering yarn is a yarn for performing the covering.

As the covering yarn, any one of a crimped yarn, a textured yarn, and a spun yarn having bulkiness and stretchability, or a plurality of these yarns are preferably used. When these yarns are used as covering yarns, when the covering yarns are spirally wound around the hollow fiber membranes, the hollow fiber membrane unit can be completed online without damaging the hollow fiber membranes. Specifically, fibers having a stretch ratio of more than 1% are preferable. Here, "online" means that the membrane unit is completed in a series of processes up to winding the hollow fiber membrane discharged from the spinneret.

The material of the covering yarn is not particularly limited, but examples thereof include processed yarns such as polyester, polypropylene, and polyphenylene sulfide.

A hollow fiber membrane module of the present invention includes the hollow fiber membrane unit according to the present invention incorporated in a bundle case having an opening portion for fluid conduction on a side surface. The shape of the bundle case is not particularly limited, and examples thereof include a cylindrical shape and a substantially rectangular shape. From the viewpoint of easily filling the hollow fiber membrane unit inside the bundle case, a cylindrical shape is preferable.

More specifically, the hollow fiber membrane unit of the present invention is filled in a cylindrical or rectangular bundle case, and both ends of the hollow fiber membrane unit are fixed with a potting material to produce the hollow fiber membrane module of the present invention. As the potting material, polyurethane, epoxy, silicone, nylon, or the like is appropriately selected and used.

As a method for producing the hollow fiber membrane of the present invention, there is a method for forming a hollow fiber membrane as described below as one method. That is, when the spinning dope solution (the polysulfone-based polymer concentration is preferably 20% by mass or more and 35% by mass or less, and more preferably 25% by mass or more and 30% by mass or less), which is made by dissolving a polysulfone-based polymer and polyvinylpyrrolidone in a mixture of a good solvent (preferably, N,N-dimethylacetamide, dimethyl sulfoxide, dimethylformamide, N-methylpyrrolidone, or dioxane) and a poor solvent for polysulfone, is discharged from a double annulation spinneret, an injection liquid is caused to flow to the inside, and the spinning dope solution is caused to travel in a dry zone of 350 mm, and then coagulated in a coagulation solution. Here, since the humidity of the dry zone affects the dope solution, the phase separation behavior in the vicinity of the outer surface is accelerated by supplying moisture from the outer surface of the membrane during traveling of the dry zone, and accordingly, the pore size can be increased, resulting in reduction of permeation resistance in humidification. However, when the relative humidity is too high, coagulation of the dope solution on the outer surface is dominant, such that the pore size tends to rather decrease, resulting in increase of permeation resistance in humidification. Therefore, the relative humidity is preferably 60 to 90%. In addition, as a composition of the injection liquid, it is preferable to use an injection liquid having a composition based on the solvent used for the spinning dope solution from the viewpoint of process suitability. As the concentration of the injection liquid, for example, when N,N-dimethylacetamide is used, an aqueous solution of 10 to 60% by mass, further 20 to 50% by mass is suitably used.

The coagulated hollow fiber membrane is washed with warm water of 40°C or more and 90°C or less and wound. When the washing temperature is lower than 40°C, washing of the organic solvent and the like becomes insufficient, and an eluate from the hollow fiber membrane may affect the use. When the washing temperature exceeds 90°C, the hydrophilic polymer is washed more than necessary, and thus the hydrophilicity of the hollow fiber membrane may be reduced.

Then, a heat treatment is performed in order to fix the hollow fiber membrane to a desired void size, and accordingly, a hollow fiber membrane in a dry state is obtained. The heat treatment is to reduce the size of voids by drying the hollow fiber membrane in a wet state. After this treatment, moisturization (glycerin application or water filling) of the hollow fiber membrane becomes unnecessary.

As a heat treatment method for the hollow fiber membranes, it is preferable to divide the hollow fiber membranes into several hundred to several thousand hollow fiber membranes, and dry the hollow fiber membranes in a dry heat dryer at 40°C or more and 170°C or less for 30 minutes or more. The drying temperature is more preferably 50°C or more and 170°C or less, and more preferably 50°C or more and 150°C or less.

When the drying temperature is lower than 40°C, it takes time during drying treatment, and it may be difficult to control the temperature depending on the external atmosphere, and thus the size of the void may not be controlled. When the drying temperature is higher than 170°C, when a polysulfone-based polymer is used, the temperature approaches the glass transition temperature of the polysulfone-based polymer, and thus the hollow fiber membrane may be damaged. The drying treatment time is preferably 30 minutes or more. The drying treatment time is more preferably 5 hours or more. The upper limit of the drying treatment time is not particularly set, but is preferably within 72 hours in consideration of work efficiency. When the drying treatment time is shorter than 30 minutes, moisture in the hollow fiber membrane cannot be completely removed, and there may be a part where heat treatment is not performed. In this case, there are parts where the voids are contracted and parts where the voids are not contracted in the hollow fiber membrane, and accordingly, separation of moisture and air in water vapor is insufficient, which may lead to air leakage. In addition, when heat is applied at the time of use, the size of the voids at parts where the voids are not contracted may change, and the initial performance may fluctuate.

The method for preparing the hollow fiber membrane module of the present invention is not particularly limited, and one example thereof is as follows. First, the hollow fiber membrane unit is cut to a required length and put into a bundle case. Then, the hollow fiber membrane is temporarily capped at both ends, and a potting material is put into both the end portions of the hollow fiber membrane. Here, a method in which the potting material is poured while the module is rotated with a centrifuge is a preferable method because the potting material is uniformly filled. After the potting material is solidified, the hollow fiber membrane is cut at both end portions to be opened at both ends, and thus a hollow fiber membrane module is obtained.

The humidity control machine of the present invention is a humidity control machine including the hollow fiber membrane unit of the present invention or the hollow fiber membrane module of the present invention, and more specifically, the humidity control machine of the present invention is obtained by incorporating the hollow fiber membrane module of the present invention in a housing made of metal or resin. Here, the humidity control machine corresponds to a device having a humidification function, a device having a dehumidification function, a device having both a humidification function and a dehumidification function, and the like. In the humidity control machine of the present invention, the required specifications can be adjusted by freely changing the number of the hollow fiber membrane modules to be mounted depending on the intended use.

Further, the fuel cell system of the present invention is a fuel cell system including the humidity control machine and the fuel cell of the present invention, and the application thereof is not particularly limited, but the fuel cell vehicle system can be suitably used for a home fuel cell, a fuel cell vehicle, and the like. Examples of the fuel cell system include, but are not particularly limited to, a system that supplies power while supplying air and (or) hydrogen humidified using a hollow fiber membrane module to a fuel cell. In the case of a fuel cell vehicle, for example, the obtained electric power is supplied to a motor and a battery via a power control unit.

In addition, the air conditioning system of the present invention is an air conditioning system including the humidity control machine and the temperature control unit of the present invention, and can be used for performing humidity management and the like in general homes, buildings, offices, factories, and the like although the application is not particularly limited. The air conditioning system of the present invention is an air conditioning system in which humidity of the intake outside air is adjusted by the above-described hollow fiber membrane module. As an example of this air conditioning system, although not particularly limited, when outside air is taken into the air conditioner, the outside air passes through the air filter, the temperature control unit, the hollow fiber membrane module, and the blower in this order and is supplied into the room. The indoor space is cooled or heated by the temperature control unit depending on whether the indoor space is humidified or dehumidified. In addition, humidification or dehumidification may be performed by adding a dehumidifier to the hollow fiber membrane of the hollow fiber membrane module.

### EXAMPLES

Hereinbelow, the present invention will be described more specifically with reference to Examples. It should be noted that the present invention is not to be considered limited to the following Examples. Descriptions are made of respective evaluation methods in Examples in the following (1) to (11).

### (1) Measurement of Dimensions of Hollow Fiber Membrane

The hollow fiber membrane was cut with a single blade in the membrane thickness direction and set in a microwatcher (VH-Z100 manufactured by KEYENCE CORPORATION). When the cross section of the hollow fiber membrane was crushed by cutting, the cutting was repeated until the hollow fiber membrane had a substantially perfect circle. The cross section of the hollow fiber membrane was observed with a 1,000 times lens, the range of the membrane thickness width of the hollow fiber membrane was designated on the monitor screen on which the cross section was projected, and the numerical value displayed on the monitor screen was read. The membrane thickness width was measured at five points for one hollow fiber membrane. The above series of measurements was performed with respect to any five hollow fiber membranes, and the average value of 25 pieces of measurement data in total was calculated and defined as the membrane thickness of the hollow fiber membrane. in addition, a numerical value of the hollow fiber membrane inner diameter is displayed on the monitor screen by designating the range of the hollow portion width. The width of the hollow portion was measured at two points for one hollow fiber membrane. The above series of measurements was performed with respect to any five hollow fiber membranes, and the average value of 10 pieces of measurement data in total was calculated and defined as the inner diameter of the hollow fiber membrane.

### (2) Preparation of Sample for SEM Observation of Cross Section of Hollow Fiber Membrane

The hollow fiber membrane obtained by membrane formation was immersed in water for 1 hour or more to be wetted, then frozen in liquid nitrogen, and rapidly folded to obtain a sample for observing a cross section of the hollow fiber membrane. When the voids in the hollow part or the thick part of the hollow fiber membrane were blocked, the sample preparation was performed again. The blocking of the hollow part may be caused by deformation of the hollow fiber membrane in the stress direction during the cutting process.

In addition, when an SEM image was used in each of the following methods, an observation sample was adjusted by the method described herein to obtain an image.

### (3) Measurement of Thickness of Fine Pores Layer

A 10,000 times image of the cross section on the inner surface side of the hollow fiber membrane was photographed by SEM, and taken into a computer. Next, the number of pixels of the scale bar indicating a known length in the image was measured on the image processing software, and the length (µm) per pixel number was calculated. The size of the captured image was 12.7 um wide × 9.52 µm long. The pores of the network structure were easily recognized by adjusting the contrast and brightness of the image, the pore part was made black, the membrane part was made white, a threshold value was then set, binarization processing was performed, and analysis was performed.

When the void (b) was visible in the image, the thickness of the fine pores layer was measured in the direction of the void (b) from the surface on the side where the fine pores layer was disposed.

A straight line perpendicular to the surface was drawn in the thickness direction of the hollow fiber membrane, that is, from the surface on the side where the fine pores layer was disposed toward the other surface, and the distance between the surface on the side where the fine pores layer was disposed (the surface on the side close to the fine pores layer) and the end portion of the void (b) closest to the microsurface on the straight line and having a length of a major axis of 20% or more and 60% or less of the thickness of the hollow fiber membrane on the straight line on which the side where the fine pores layer was disposed (the end portion on the side close to the fine pores layer) was defined as the thickness of the fine pores layer. In a case where analysis cannot be performed with the 10,000 times image depending on the size and shape of the void (b), an image adjusted at a magnification of 1,000 times to 5,000 times was photographed, and the thickness of the fine pores layer was measured in the same manner as described above. The same measurement was performed on 20 captured images, and the average value of a total of 20 or more pieces of data was defined as the thickness of the fine pores layer.

When no void (b) was observed in the cross section observation of the hollow fiber membrane, the distance between the end portion on the side where the fine pores layer was disposed and the region where voids having an average pore size of 0.3 um or more existed from the surface on the side where the fine pores layer was disposed was defined as the thickness of the fine pores layer. The same measurement was performed on 20 captured images, and the average value of a total of 20 pieces of data was defined as the thickness of the fine pores layer.

### (4) Measurement of Void (b)

A 1,000 times image of the cross section of the hollow fiber membrane was photographed by SEM, and taken into a computer. Next, the number of pixels of a scale bar indicating a known length in the SEM image in the image was measured on the image processing software, and the length (µm) per pixel number was calculated. The size of the captured image was 126.98 um wide × 95.24 um long. The pores of the network structure were easily recognized by adjusting the contrast and brightness, the pore part was made black, the membrane part was made white, a threshold value was then set to obtain a binarized image, which was then analyzed.

The major axis in the thickness direction of the hollow fiber membrane was measured for macro-sized coarse pores that are clearly observed to be large in the image. The same measurement was performed on five captured images of one hollow fiber membrane, and the average value of the major axis was calculated. In addition, the ratio of the major axis to the thickness of the hollow fiber membrane was determined based on the average value of the total measured major axis and the membrane thickness obtained above. When the major axis was 20% or more and 60% or less of the thickness of the hollow fiber membrane, the void was defined as a void (b). In addition, the region where the void (b) existed was treated as a coarse pores layer.

For the voids identified as the void (b), the major axis and the minor axis were measured using image processing software for three points in descending order, and the major axis/minor axis was calculated. Three major axis/minor axis were obtained per captured image. The same measurement was performed on 20 captured images, and the average value of the major axis/minor axis of a total of 60 images was defined as the major axis/minor axis. In addition, the average value of the obtained total major axis and total minor axis was defined as the average pore size of the void (b).

### (5) Measurement of Thickness of Strength Retention Layer

A 1,000 times image of the cross section of the hollow fiber membrane was photographed by SEM, and taken into a computer. Next, the number of pixels of the scale bar indicating a known length in the image was measured on the image processing software, and the length (µm) per pixel number was calculated. The size of the captured image was 126.98 um wide × 95.24 um long. A straight line perpendicular to the surface was drawn from the other surface of the microsurface toward the microsurface, and the distance between the surface (hereinafter referred to as a strength retention surface) of the hollow fiber membrane in which the strength retention layer existed and the end portion of the void (b) closest to the strength retention surface on the straight line on the strength retention surface side on the straight line was defined as the thickness of the strength retention layer. With respect to the captured image (width: 126.98 um × length: 95.24 µm), the image was divided into four in the vertical direction, and four images with visual fields of width: 126.98 µm× length: 23.81 um were obtained. Next, the thickness from the void (b) closest to the strength retention surface in each visual field to the strength retention surface was measured, and the thicknesses of four strength retention layers per captured image were obtained. The same measurement was performed on 15 captured images, and the average value of measurement data of the thicknesses of a total of 60 strength retention layers was calculated and defined as the thickness of the strength retention layer.

When there was no void (b), there was no coarse pores layer, and thus the remaining distance obtained by subtracting the thickness of the fine pores layer from the thickness of the hollow fiber membrane was defined as the thickness of the strength retention layer.

### (6) Observation of Thickness of Dense Layer

A 30,000 times image on the inner surface side of the hollow fiber membrane was photographed by SEM, and taken into a computer. Next, analysis processing was performed with image processing software. The pores of the network structure were easily recognized by adjusting the contrast and brightness of the SEM image, the pore part was made black, the membrane part was made white, a threshold value was then set to obtain a binarized image. The threshold value was set such that the pores were not connected to each other and become larger than the actual pore. When the structure part and the other parts were not able to be divided due to the difference in contrast in the image, the image was cut at the part having similar contrast ranges, the cut images were each binarized, and then connected back to one image. Alternatively, the part other than the structure part can be filled in black to perform image analysis. When the pores were observed doubly in the depth direction, the shallower pore was measured.

In addition, the pore area was obtained by analyzing the area of a part displayed in black by the binarization processing of the image, that is, a single pore part using image processing software. The number of pixels of a scale bar indicating a known length in the image was measured, and the length (µm) per pixel was calculated. The size of the captured image was 4.21 um wide × 3.16 um long.

The lower limit area of pores to be detected at the time of image analysis was set to 1260 nm², pores having a pore area exceeding 1260 nm² were painted in a fluorescent color, a layer having no pore area exceeding 1260 nm² was used as a dense layer, and the thickness of the dense layer was measured in a direction from one surface toward the other surface.

A straight line perpendicular to the surface was drawn in the thickness direction of the hollow fiber membrane, that is, from one surface toward the other surface, and the distance between the surface (hereinafter referred to as a dense surface) of the hollow fiber membrane in which the dense layer existed and the end portion of the pore closest to the dense surface on the straight line and having a pore area exceeding 1,260 nm² on the dense surface side on the straight line was defined as the thickness of the dense layer.

With respect to the captured image (width 4.21 um × height 3.16 µm), the image was divided into three in the vertical direction, and three images with visual fields of width 4.21 um × height 1.05 um were obtained. Next, the thickness from the pore closest to the dense surface to the dense surface in each visual field was measured, and the thicknesses of three dense layers per captured image were obtained. The same measurement was performed on 20 captured images, and the average value of measurement data of the thicknesses of a total of 60 dense layers was calculated and defined as the thickness of the dense layer.

### (7) Ratio of Average Pore Size of Strength Retention Layer to Average Pore Size of Coarse Pores Layer

The average pore size of the void (b) calculated in the above (4) was defined as the average pore size of the coarse pores layer. All the pores present in the region of the thickness part identified as the strength retention layer in the above (5) were analyzed by image analysis software and quantified to determine the average pore size of the strength retention layer. Specifically, from the sum of the areas of the pore parts and the number of pore parts in the image read into the image analysis software, the pore size (average pore size) is obtained by the following Formulas [1] and [2].

From the average pore size of the void (b) and the average pore size of the strength retention layer, the ratio of the average pore size of the strength retention layer to the average pore size of the coarse pores layer (average pore size of strength retention layer/average pore size of coarse pores layer) was determined. Pore area (average pore area) [µm2] = sum of areas of pore parts/number of pore parts Pore size (average pore size) [um] = (average pore area/π)1/2

### (8) Measurement of Porosity of Hollow Fiber Membrane

100 hollow fiber membranes having a length of 30 cm were dried with a dryer at 50°C until there was no weight change, and the dry weight (dw, unit: g) was obtained. The volume (V, unit: cm³) of the hollow fiber membranes was calculated from the dimensions, number, and length of the hollow fiber membranes. Using the density (ρ, unit: g/cm³) of the polymer as the main component of the hollow fiber membrane, the porosity was calculated by the following calculation formula. The density of the polymer as the main component of the hollow fiber membrane may be measured with a densitometer, and the obtained value may be used. Porosity of entire hollow fiber membrane (%) = [1 - (dw/(V × ρ))] × 100

### (9) Measurement of Content of Polyvinylpyrrolidone (PVP) in Hollow Fiber Membrane

The hollow fiber membrane dried at 120°C for 5 hours with a dryer was cut into a length of about 5 mm. This was weighed, and then the nitrogen content based on the hollow fiber membrane in a dry state was measured using an NC analyzer. When the main component at the time of forming the hollow fiber membrane was polysulfone and PVP was contained as a hydrophilic polymer, since a nitrogen-derived substance was not contained other than PVP, the PVP content (X) based on the hollow fiber membrane in a dry state was calculated from the nitrogen content (N). In addition, from the obtained PVP content (X), the polysulfone-based PVP content (Y) can also be calculated. X: PVP content (%, based on hollow fiber membrane in dry state) = (N × 111/14) × 100 Y: PVP content (%, based on polysulfone) = [X/(100 - X)] × 100

### (10) Measurement of Water Vapor Permeation Speed

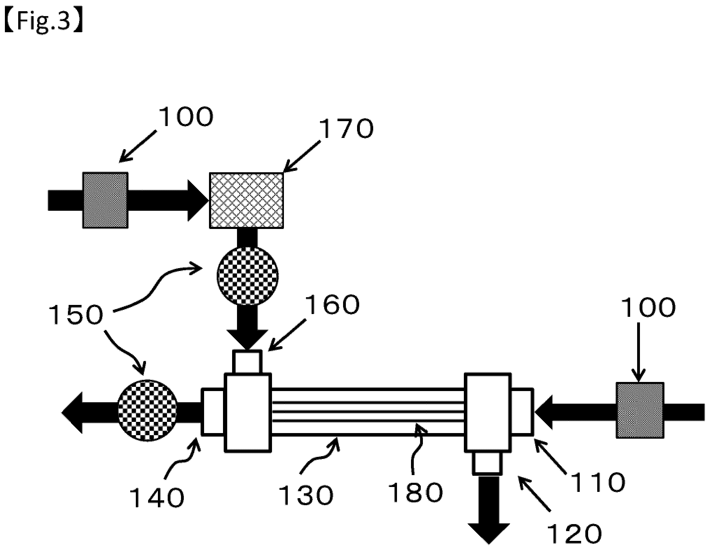

The water vapor permeability was measured as follows. First, hollow fiber membrane modules were connected as shown in Fig. 3. Using a hollow fiber membrane module, dry air at a temperature of 100°C and a pressure of 170 kPaG was caused to flow inside the hollow fiber membrane, and humidity-controlled air at a temperature of 100°C, a dew point temperature of 90°C, and a pressure of 160 kPaG was caused to flow from the outside of the hollow fiber membrane in a 1-pass cross flow. The water vapor permeation amount per hour was measured, and a numerical value converted into the water vapor permeation speed (g/min/cm²) per unit membrane area and unit time was calculated. In addition, the water vapor recovery ratio was calculated from the ratio of the water vapor flow rate (g/min) of the humidity-controlled air supplied to the outside of the hollow fiber membrane to the water vapor flow rate (g/min) of the air coming out from the inside of the hollow fiber membrane.

### (11) Durability Evaluation by Pressure Impulse Test

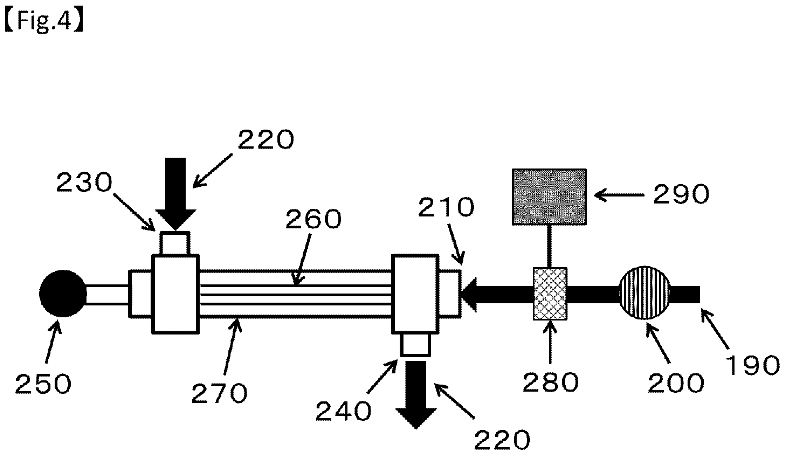

The durability evaluation by the pressure impulse test was measured as follows. First, hollow fiber membrane modules were connected as shown in Fig. 4. Water vapor was caused to flow to the outside of the hollow fiber membrane of the hollow fiber membrane module, and the temperature of the main body of the hollow fiber membrane module was maintained at 95°C or more. One inner side of the hollow fiber membrane of the hollow fiber membrane module was sealed with a pressure sensor, and air was intermittently (ON: 200 kPa for 10 seconds, OFF: 0 kPa for 5 seconds in one cycle for 15 seconds) applied from the other side. At this time, it was determined that the membrane was damaged when the pressure sensor was less than 150 kPa in the ON state, and the test was stopped. The durability was compared by the number of cycles from the start of the test to the stop of the test.

### (Example 1)

28% by mass of polysulfone ("Udel^{®}" P-3500 manufactured by Solvay Corp) and 5% by mass of polyvinylpyrrolidone (K 30 manufactured by BASF Corp) were heated and dissolved in total of 100% by mass of 66% by mass of N,N-dimethylacetamide and 1% by mass of water to obtain a spinning dope solution. A total of 100% by mass solution of 30% by mass of N,N-dimethylacetamide and 70% by mass of water was used as an injection liquid.

The spinning dope solution was fed to a spinneret portion, discharged from an outer tube of an orifice-type double annulation spinneret, and the injection liquid was discharged from an inner tube. The discharged spinning dope solution passed through a humidity-controlled dry zone atmosphere, then was introduced into a coagulating bath, and passed through a water washing process at 80°C, and the obtained hollow fiber membrane in a wet state was wound into a wound bundle. The hollow fiber membrane had an inner diameter of 600 um and a membrane thickness of 100 um. The bundle of the wound hollow fiber membranes was dried in a dry heat dryer at 100°C for 24 hours to obtain a hollow fiber membrane in a dry state. The obtained hollow fiber membrane had a porosity of 70% (dw: 2.5 g, V: 6.6 cm³, p: 1.24 g/cm³) and a PVP content of 4.3% by mass. Further, when the cross section of the hollow fiber membrane was observed using an SEM, it was confirmed that, in the vertical cross section of the hollow fiber membrane, the fine pores layer, the coarse pores layer, and the strength retention layer were adjacent in this order from the inner surface side. The results of analyzing the images obtained by SEM observation are shown in Table 1.

Based on the inner diameter (5.3 mm) of the stainless steel case, a hollow fiber membrane was filled to have a filling rate closest to 45%, both ends of the hollow fiber membrane were fixed to the end portion of the stainless steel case with a potting material, and a part of the end portion of the potting material was cut to open both the surfaces of the hollow fiber membrane at both ends, thereby obtaining a hollow fiber membrane module 1.

The water vapor permeation speed of the obtained hollow fiber membrane module was measured, and the durability was evaluated by a pressure impulse test. The results are shown in Table 2. A hollow fiber membrane and a hollow fiber membrane module having not only excellent water vapor permeability but also durability were obtained.

### (Example 2)

A hollow fiber membrane module 2 was obtained by the same experimental method as in Example 1 except that a hollow fiber membrane having an inner diameter of 640 um and a membrane thickness of 100 um was formed using the spinning dope solution and the injection liquid of Example 1. The obtained hollow fiber membrane had a porosity of 70% (dw: 2.6 g, V: 7.0 cm³, p: 1.24 g/cm³) and a PVP content of 4.3% by mass. Further, when the cross section of the hollow fiber membrane was observed using an SEM, it was confirmed that, in the vertical cross section of the hollow fiber membrane, the fine pores layer, the coarse pores layer, and the strength retention layer were adjacent in this order from the inner surface side. The results of analyzing the images obtained by SEM observation are shown in Table 1.

The water vapor permeation speed of the obtained hollow fiber membrane module 2 was measured, and the durability was evaluated by a pressure impulse test. The results are shown in Table 2. A hollow fiber membrane and a hollow fiber membrane module having not only excellent water vapor permeability but also durability were obtained.

### (Example 3)

A hollow fiber membrane module 3 was obtained by the same experimental method as in Example 1 except that a hollow fiber membrane having an inner diameter of 700 um and a membrane thickness of 100 um was formed using the spinning dope solution and the injection liquid of Example 1. The obtained hollow fiber membrane had a porosity of 69% (dw: 2.9 g, V: 7.5 cm³, p: 1.24 g/cm³) and a PVP content of 4.3% by mass. Further, when the cross section of the hollow fiber membrane was observed using an SEM, it was confirmed that, in the vertical cross section of the hollow fiber membrane, the fine pores layer, the coarse pores layer, and the strength retention layer were adjacent in this order from the inner surface side. The results of analyzing the images obtained by SEM observation are shown in Table 1.

The water vapor permeation speed of the obtained hollow fiber membrane module 3 was measured, and the durability was evaluated by a pressure impulse test. The results are shown in Table 2. A hollow fiber membrane and a hollow fiber membrane module having not only excellent water vapor permeability but also durability were obtained.

### (Example 4)

A hollow fiber membrane module 4 was obtained by the same experimental method as in Example 1 except that a total of 100% by mass of a solution of 20% by mass of N,N-dimethylacetamide and 80% by mass of water was used as an injection liquid. The obtained hollow fiber membrane had a porosity of 70% (dw: 2.5 g, V: 6.6 cm³, p: 1.24 g/cm³) and a PVP content of 4.0% by mass. Further, when the cross section of the hollow fiber membrane was observed using an SEM, it was confirmed that, in the vertical cross section of the hollow fiber membrane, the fine pores layer, the coarse pores layer, and the strength retention layer were adjacent in this order from the inner surface side. The results of analyzing the images obtained by SEM observation are shown in Table 1.

The water vapor permeation speed of the obtained hollow fiber membrane module 4 was measured, and the durability was evaluated by a pressure impulse test. The results are shown in Table 2. A hollow fiber membrane and a hollow fiber membrane module having not only excellent water vapor permeability but also durability were obtained.

### (Example 5)

A hollow fiber membrane module 5 was obtained by the same experimental method as in Example 1 except that a hollow fiber membrane having an inner diameter of 600 um and a membrane thickness of 90 µm was formed using a spinning dope solution prepared by heating and dissolving 30% by mass of polysulfone ("Udel^{®}" P-3500 manufactured by Solvay Corp) and 2.5% by mass of polyvinylpyrrolidone (K 30 manufactured by BASF Corp) in a total of 100% by mass of 66.5% by mass of N,N-dimethylacetamide and 1% by mass of water. The obtained hollow fiber membrane had a porosity of 65% (dw: 2.5 g, V: 5.9 cm³, p: 1.24 g/cm³) and a PVP content of 3.0% by mass. Further, when the cross section of the hollow fiber membrane was observed using an SEM, it was confirmed that, in the vertical cross section of the hollow fiber membrane, the fine pores layer, the coarse pores layer, and the strength retention layer were adjacent in this order from the inner surface side. The results of analyzing the images obtained by SEM observation are shown in Table 1.

The water vapor permeation speed of the obtained hollow fiber membrane module 5 was measured, and the durability was evaluated by a pressure impulse test. The results are shown in Table 2. A hollow fiber membrane and a hollow fiber membrane module having not only excellent water vapor permeability but also durability were obtained.

### (Comparative Example 1)

A hollow fiber membrane in a dry state was obtained in the same manner as in Example 1, except that 20% by mass of polysulfone ("Udel^{®}" P-3500 manufactured by Solvay Corp) and 5% by mass of polyvinylpyrrolidone (K 30 manufactured by BASF Corp) were heated and dissolved in a total of 100% by mass of 74% by mass of N,N-dimethylacetamide and 1% by mass of water to obtain a spinning dope solution in a dry state.

The obtained hollow fiber membrane had a PVP content of 3.0% by mass and a porosity of 81% (dw: 1.6 g, V: 6.6 cm³, p: 1.24 g/cm³), and had extremely high porosity. Further, when the cross section of the hollow fiber membrane was observed using an SEM, in the vertical cross section of the hollow fiber membrane, the void (b) existed throughout the entire thick portion of the hollow fiber membrane, making it difficult to identify the strength retention layer. The results of analyzing the images obtained by SEM observation are shown in Table 1.

Based on the inner diameter (5.3 mm) of the stainless steel case, a hollow fiber membrane was filled to have a filling rate closest to 45%, both ends of the hollow fiber membrane were fixed to the end portion of the stainless steel case with a potting material, and a part of the end portion of the potting material was cut to open both the surfaces of the hollow fiber membrane at both ends, thereby obtaining a hollow fiber membrane module 6.

The water vapor permeation speed of the obtained hollow fiber membrane module 6 was measured, and the durability was evaluated by a pressure impulse test. The results are shown in Table 2. Since the hollow fiber membrane had high porosity, water vapor permeability was extremely excellent, but the test was stopped after 10,000 cycles of the pressure impulse test, and durability was insufficient.

### (Comparative Example 2)

A hollow fiber membrane in a dry state was obtained in the same manner as in Example 1, except that 20% by mass of polysulfone ("Udel^{®}" P-3500 manufactured by Solvay Corp) and 10% by mass of polyvinylpyrrolidone (K 30 manufactured by BASF Corp) were heated and dissolved in a total of 100% by mass of 69% by mass of N,N-dimethylacetamide and 1% by mass of water to obtain a spinning dope solution in a dry state.

The obtained shaped hollow fiber membrane had a PVP content of 4.5% by mass and a porosity of 82% (dw: 1.5 g, V: 6.6 cm³, p: 1.24 g/cm³), and had extremely high porosity as in Comparative Example 1. When the cross section of the hollow fiber membrane was observed using an SEM, in the vertical cross section of the hollow fiber membrane, the void (b) was formed in the central part of the membrane thickness of the hollow fiber membrane, and the major axis of the void (b) was as long as 55 um. Therefore, the thickness of the fine pores layer was increased, and the strength retention layer was thin. The results of analyzing the images obtained by SEM observation are shown in Table 1.

Based on the inner diameter (5.3 mm) of the stainless steel case, a hollow fiber membrane was filled to have a filling rate closest to 45%, both ends of the hollow fiber membrane were fixed to the end portion of the stainless steel case with a potting material, and a part of the end portion of the potting material was cut to open both the surfaces of the hollow fiber membrane at both ends, thereby obtaining a hollow fiber membrane module 7.

The water vapor permeation speed of the obtained hollow fiber membrane module 7 was measured, and the durability was evaluated by a pressure impulse test. The results are shown in Table 2. The water vapor permeability was extremely excellent, but the test was stopped after 15,000 cycles of the pressure impulse test, and durability was insufficient.

### (Comparative Example 3)

28% by mass of polysulfone ("Udel^{®}" P-3500 manufactured by Solvay Corp) and 14% by mass of polyvinylpyrrolidone (K 30 manufactured by BASF Corp) were heated and dissolved in total of 100% by mass of 57% by mass of N,N-dimethylacetamide and 1% by mass of water to obtain a spinning dope solution. A solution of 35% by mass of N,N-dimethylacetamide and 65% by mass of water was used as an injection liquid.

The spinning dope solution was fed to a spinneret portion, discharged from an outer tube of an orifice-type double annulation spinneret, and the injection liquid was discharged from an inner tube. The discharged spinning dope solution passed through a humidity-controlled dry zone atmosphere, then was introduced into a coagulating bath, and passed through a water washing process at 80°C, and the obtained hollow fiber membrane in a wet state was wound into a wound bundle. The hollow fiber membrane had an inner diameter of 640 um and a membrane thickness of 100 µm.

The bundle of the wound hollow fiber membranes was dried in a dry heat dryer at 100°C for 24 hours to obtain a hollow fiber membrane in a dry state. The obtained hollow fiber membrane had a porosity of 70% (dw: 2.6 g, V: 7.0 cm³, p: 1.24 g/cm³) and a PVP content of 6.3% by mass. In addition, when the cross section of the hollow fiber membrane was observed using an SEM, the presence of the void (b) was not observed in the vertical cross section of the hollow fiber membrane, and a coarse pores layer was not formed. Therefore, the cross section of the hollow fiber membrane is the cross section of the membrane in which the fine pores layer and the strength retention layer were adjacent to each other in this order from the inner surface side, and the strength retention layer had a thick structure. The results of analyzing the images obtained by SEM observation are shown in Table 1.

Based on the inner diameter (5.3 mm) of the stainless steel case, a hollow fiber membrane was filled to have a filling rate closest to 45%, both ends of the hollow fiber membrane were fixed to the end portion of the stainless steel case with a potting material, and a part of the end portion of the potting material was cut to open both the surfaces of the hollow fiber membrane at both ends, thereby obtaining a hollow fiber membrane module 8.

The water vapor permeation speed of the obtained hollow fiber membrane module 8 was measured, and the durability was evaluated by a pressure impulse test. The results are shown in Table 2. The pressure impulse test reached an upper limit of 100,000 cycles, and excellent durability was exhibited, but the water vapor permeability was low due to the absence of a coarse pores layer and the influence of an increase in thickness of the strength retention layer.

**[Table 1-1]**

| | Spinning dope solution | | Hollow fiber membrane | | | | | | |
|---|---|---|---|---|---|---|---|---|---|
| | Polysulfone | PVP (K30) | Inner diameter | Membrane thickness | Porosity | PVP content | Dense layer thickness | Average pore size of void (a) in fine pores layer | Thickness of fine pores layer |
| | Parts by mass | Parts by mass | µm | µm | % | X: based on porous membrane in dry state, % by mass | µm | µm | µm |
| Example 1 | 28 | 5 | 600 | 100 | 70 | 4.3 | 0.25 | 0.08 | 7.0 |
| Example 2 | 28 | 5 | 640 | 100 | 70 | 4.3 | 0.25 | 0.08 | 8.0 |
| Example 3 | 28 | 5 | 700 | 100 | 69 | 4.3 | 0.3 | 0.08 | 8.0 |
| Example 4 | 28 | 5 | 600 | 100 | 70 | 4.0 | 0.3 | 0.07 | 8.0 |
| Example 5 | 30 | 2.5 | 600 | 90 | 65 | 3.0 | 0.35 | 0.06 | 10.0 |
| Comparative Example 1 | 20 | 5 | 600 | 100 | 81 | 3.0 | 0.04 | 0.11 | 11.0 |
| Comparative Example 2 | 20 | 10 | 600 | 100 | 82 | 4.5 | 0.2 | 0.12 | 18.0 |
| Comparative Example 3 | 28 | 14 | 640 | 100 | 70 | 6.3 | 0.6 | 0.15 | 25.0 |

**[Table 1-2]**

| | Hollow fiber membrane | | | | | | | |
|---|---|---|---|---|---|---|---|---|
| | Length of major axis of void (b) in coarse pores layer | Length of minor axis of void (b) in coarse pores layer | Average pore size of void (b) in coarse pores layer | Length of major axis of void (b) in coarse pores layer | Ratio of major axis/minor axis of void (b) in coarse pores layer | Average pore size of void (c) in strength retention layer | Ratio of average pore size of strength retention layer/average pore size of coarse pores layer | Thickness of strength retention layer |
| | µm | µm | µm | Based on membrane thickness,% | - | µm | - | Based on membrane thickness,% |
| Example 1 | 40.0 | 8.0 | 24.0 | 40.0 | 5.0 | 0.23 | 0.010 | 35 |
| Example 2 | 35.0 | 8.0 | 21.5 | 35.0 | 4.4 | 0.23 | 0.011 | 40 |
| Example 3 | 35.0 | 7.8 | 21.4 | 35.0 | 4.5 | 0.23 | 0.011 | 40 |
| Example 4 | 40.0 | 8.0 | 24.0 | 40.0 | 5.0 | 0.23 | 0.010 | 33 |
| Example 5 | 30.0 | 6.0 | 18.0 | 27.0 | 5.0 | 0.20 | 0.011 | 45 |
| Comparative Example 1 | 50.0 | 10.0 | 30.0 | 50.0 | 5.0 | 0.50 | 0.017 | 4.95 |
| Comparative Example 2 | 55.0 | 13.0 | 34.0 | 55.0 | 4.2 | 0.50 | 0.015 | 23 |
| Comparative Example 3 | - | - | | - | - | 0.20 | - | 75 |

In Table 1, "-" means that there is no coarse pores layer.

In the table, "based on membrane thickness" means that the membrane thickness of the hollow fiber membrane is used as a reference.

**[Table 2]**

| | Hollow fiber membrane module | | Water vapor permeation speed (water vapor permeability) | | | Pressure impulse test (Durability) |
|---|---|---|---|---|---|---|
| | Case inner diameter | Filling rate | Membrane internal pressure | Membrane external pressure | Temperature: 105 °C | Δ 200 kPa |
| | mm | % | kPaG | kPaG | g/cm²/hr/kPa | × 10,000 cycles |
| Example 1 | 5.3 | 45.6 | 170 | 160 | 0.024 | 10.0 |
| Example 2 | 5.3 | 45.2 | 170 | 160 | 0.022 | 10.0 |
| Example 3 | 5.3 | 43.1 | 170 | 160 | 0.020 | 10.0 |
| Example 4 | 5.3 | 45.6 | 170 | 160 | 0.021 | 10.0 |
| Example 5 | 5.3 | 45.6 | 170 | 160 | 0.021 | 10.0 |
| Comparative Example 1 | 5.3 | 45.6 | 170 | 160 | 0.027 | 1.0 |
| Comparative Example 2 | 5.3 | 45.6 | 170 | 160 | 0.023 | 1.5 |
| Comparative Example 3 | 5.3 | 45.2 | 170 | 160 | 0.013 | 10.0 |

### INDUSTRIAL APPLICABILITY

The present invention relates to a hollow fiber membrane, a hollow fiber membrane unit, a hollow fiber membrane module, and a humidity control machine. More specifically, the present invention relates to a hollow fiber membrane, a hollow fiber membrane unit, a hollow fiber membrane module, and a humidity control machine suitably used for a humidity control unit used in a fuel cell system and an air conditioning system.

### DESCRIPTION OF REFERENCE SIGNS

10: Fine pores layer
20: Coarse pores layer
30: Strength retention layer
40: Inner surface of hollow fiber membrane
50: Outer surface of hollow fiber membrane
60: Void (b)
70: Void (b)
80: Major axis of void (b)
90: Minor axis of void (b)
100: Air flow meter
110: DRY gas inlet
120: WET gas outlet
130: Membrane module
140: DRY gas outlet
150: Temperature and humidity measurement part
160: WET gas inlet
170: Humidifying container
180: Hollow fiber membrane
190: DRY gas
200: Regulator
210: DRY gas inlet
220: WET gas
230: WET gas inlet
240: WET gas outlet
250: Pressure gauge
260: Hollow fiber membrane
270: Membrane module
280: Electromagnetic valve
290: Impulse unit

## Claims

1. A hollow fiber membrane comprising:
a fine pores layer;
a coarse pores layer; and
a strength retention layer,
wherein the fine pores layer, the coarse pores layer, and the strength retention layer are disposed in this order from an inside of the hollow fiber membrane in a cross section perpendicular to a longitudinal direction of the membrane (hereinafter referred to as a "vertical cross section"), and a porosity of the entire hollow fiber membrane is 60% or more and 75% or less.

2. The hollow fiber membrane according to claim 1, wherein, in the vertical cross section, a ratio of an average pore size of the strength retention layer to an average pore size of the coarse pores layer is 0.005 or more and 0.05 or less.

3. The hollow fiber membrane according to claim 1, wherein, in the vertical cross section, the strength retention layer has a void (c) having an average pore size of 0.1 um or more and 1.0 um or less.

4. The hollow fiber membrane according to claim 1, wherein, in the vertical cross section, the fine pores layer has a void (a) having an average pore size of 0.05 um or more and 0.3 um or less.

5. The hollow fiber membrane according to claim 1 or 3, wherein a thickness of the strength retention layer is 28% or more and 78% or less of a thickness of the hollow fiber membrane.

6. The hollow fiber membrane according to claim 5, wherein, in the vertical cross section, the coarse pores layer has a void (b) in which a length of a major axis is 28% or more and 68% or less of a thickness of the hollow fiber membrane, and a ratio of a major axis to a minor axis (major axis/minor axis) of the void (b) is 2.0 or more and 6.0 or less.

7. The hollow fiber membrane according to claim 1 or 4, wherein in the vertical cross section, a thickness of the fine pores layer is 2.0 um or more and 12.0 um or less.

8. The hollow fiber membrane according to claim 7, further comprising a dense layer having voids with a pore area of 1,260 nm² or less in the fine pores layer in the vertical cross section, wherein a thickness of the dense layer is 0.1 µm or more and 0.5 um or less.

9. The hollow fiber membrane according to claim 1, wherein the hollow fiber membrane contains a polysulfone-based polymer and polyvinylpyrrolidone.

10. The hollow fiber membrane according to claim 9, wherein a content of the polyvinylpyrrolidone is 1% by mass or more and 5% by mass or less.

11. A hollow fiber membrane unit comprising a plurality of the hollow fiber membranes according to claim 1 or 2 bundled together.

12. A hollow fiber membrane module comprising the hollow fiber membrane unit according to claim 11 incorporated in a bundle case having an opening portion for fluid conduction on a side surface.

13. A humidity control machine comprising:
the hollow fiber membrane unit according to claim 11; or
the hollow fiber membrane module according to claim 12.

14. A fuel cell system comprising:
the humidity control machine according to claim 13; and
a fuel cell.

15. An air conditioning system comprising:
the humidity control machine according to claim 13; and
a temperature control unit.
